# EUROPEAN PATENT SPECIFICATION

(11) **EP 0 830 815 B1**
(45) Date of publication and mention of the grant of the patent: **05.03.2003**
(21) Application number: 97307185.5
(22) Date of filing: 16.09.1997
(51) Int. Cl.: A21C 9/04, A21C 15/00

(54) **Apparatus and method for sprinkling food products with powder material**
Vorrichtung zum Auftragen von Pulver auf Nahrungsmittelprodukten
Appareil et méthode pour la distribution d'un produit poudreux sur les produits alimentaires

(30) Priority: 17.09.1996 JP 26665796
(43) Date of publication of application: 25.03.1998
(73) Proprietor: RHEON AUTOMATIC MACHINERY CO. LTD., Utsunomiya-shi Tochigi-ken (JP)
(72) Inventor: Tashiro, Yasunori, Rheon Autom. Mach. Co., Ltd., Utsunomiya-shi, Tochigi-ken (JP); Kurasawa, Kazuyoshi, Rheon Autom. Mach. Co., Ltd., Utsunomiya-shi, Tochigi-ken (JP); Hosoya, Masaki, c/o Rheon Autom. Mach. Co., Ltd., Utsunomiya-shi, Tochigi-ken (JP)
(74) Representative: Leale, Robin George

(56) References cited:
- DE-A- 3 519 052
- US-A- 1 908 539
- US-A- 2 506 185
- US-A- 3 102 052
- US-A- 5 463 938

## Description

This invention relates to an apparatus and method for sprinkling food products, hereinafter called cakes (for example dumplings, such as rice dumplings mixed with mugwort or covered with bean jam, or rice balls), with powder material such as soybean flour, sesame, or green laver.

In a prior art sprinkling machine, means for scattering powder is associated with a conveyor so as to scatter powder material on the upper and side surfaces of cakes being conveyed on the conveyor. In this case, the bottom surfaces of the cakes cannot be covered with the powder material. An improved method is disclosed, for example, in Japanese Patent Publication No. 62-46149. This method comprises the step of continuously conveying and feeding both food material formed in a given shape, and grain flour, into a drum and continuously sprinkling the food material with the grain flour within the drum, the food material and the grain flour being rolled together by means of baffle rods in the drum so that the food material becomes covered with the powder. In this system, un-used grain flour can be recovered to be effectively reused. However, since adequate space within the drum is needed to cover the food material with the grain flour, a considerable space must be provided for the drum itself, which is undesirable.

Also, the finished food material has to be discharged by slanting the drum so that its outlet is below its inlet. This difference in height between the inlet and outlet causes some problems. Further, when such supplementary manual operations have to be performed, the working environment around the lower outlet is not good, especially over a long time.

Further, when producing food products which do not need covering with powder, removing the sprinkling drum from the production line entails extra work.

US 1908539 discloses an apparatus for coating bakery goods comprising a rotating drum containing a plurality of angle baffles provided on the inner side of the drum, for transporting and coating the goods along the drum and longitudinally and radially extending baffles for receiving the goods directed from the angle baffles, and raising them to a point above an output conveyor onto which they are dropped.

US 3102052 discloses a similar apparatus comprising a plurality of cylindrical drums each equipped with a series of parallel spirally arranged rails on their inner surface leading from the intake end of the drum to close to the discharge end of the drum, which serve to coat the foodstuffs upon rotation of the drum. Between the end of these rails and the discharge end of the drum are located a series of deflectors, which collect the coated foodstuffs and elevate them onto an output conveyor as the drum rotates.

DE 3519052 discloses an apparatus for sprinkling powder material onto food products, comprising: a drum having an inner surface formed around a central axis, and a plurality of engaging members mounted on the inner surface such that adjacent engaging members are separated by portions of the inner surface and such that the engaging members are fixed relative to one another, the drum also having an opening in at least one side, and means for rotating the drum around the central axis, wherein the food products are coated with powder material in said drum and the engaging members lift the food products and deposit them onto an outlet member.

The present invention is characterised over DE 3519052 in that the apparatus further comprises: an inlet member having an end portion extending through at least one said opening for feeding food products between said engaging members, and wherein said outlet member has an end portion which extends through at least one said opening into the drum.

In one embodiment the said engaging members are shaped as a comb or a wire net and are equidistantly disposed on the circumference of the drum.

In a preferred embodiment the said outlet member extends through its associated opening to an upper part of the drum.

In another embodiment the outlet member is a conveyor belt comprising a plurality of string-like belts extending around rollers.

In one embodiment the respective ends of the inlet and outlet members are placed close together in the same horizontal plane.

When cake products or the like are introduced into such an apparatus, they are sprinkled with powder material while they roll within the rotating drum. The covered products are scooped up by the engaging members and transferred to the outlet member. When the outlet member extends through an outlet opening to an upper part of the rotating drum, and when it is a conveyor belt comprising string-like belts, any excess powder on the covered products falls through the string-like belts, back to the bottom of the rotating drum, to recirculate therein.

Two embodiments of the invention will now be described by way of example and with reference to the accompanying drawings, in which:-
Fig. 1 is a side view of a first embodiment of the invention;
Fig. 2 is a partial section along line A-A of Fig. 1, illustrating the operation of the first embodiment;
Fig. 3 is a further partial section also illustrating the operation of the first embodiment;
Fig. 4 is a partial section illustrating the operation of a second embodiment; and
Fig. 5 is a partial section along line B-B of Fig. 4, also illustrating the operation of the second embodiment.

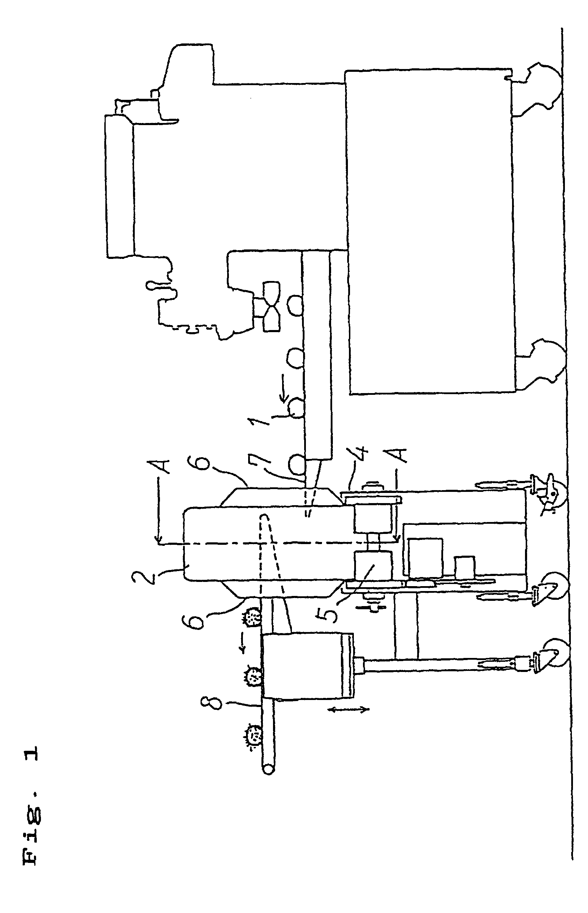

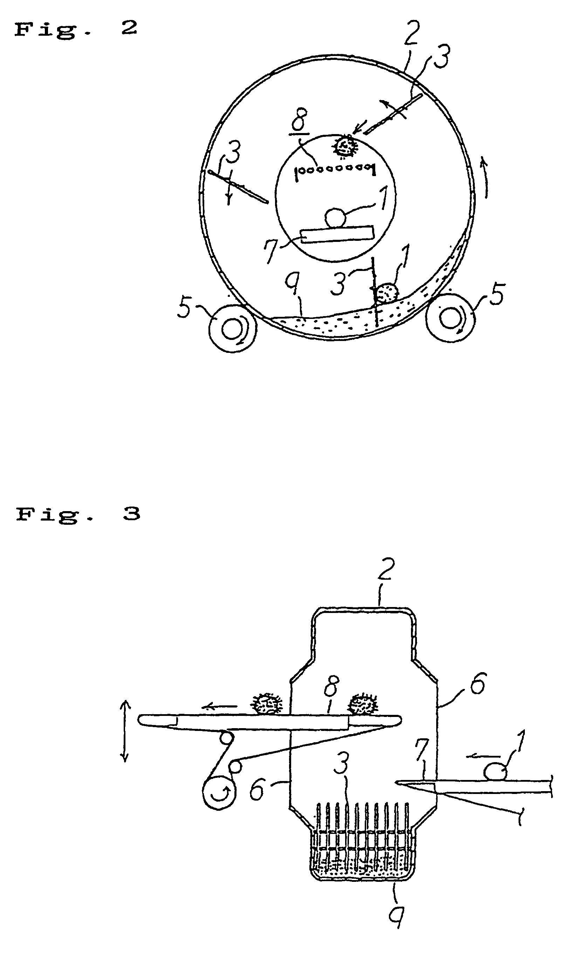

Referring to Figs. 1 to 3, the sprinkling apparatus of this embodiment comprises a rotating drum 2 for use in sprinkling powder on a cake product 1, and a driving base 4 for supporting the rotating drum 2 and for transmitting the rotating drive force.

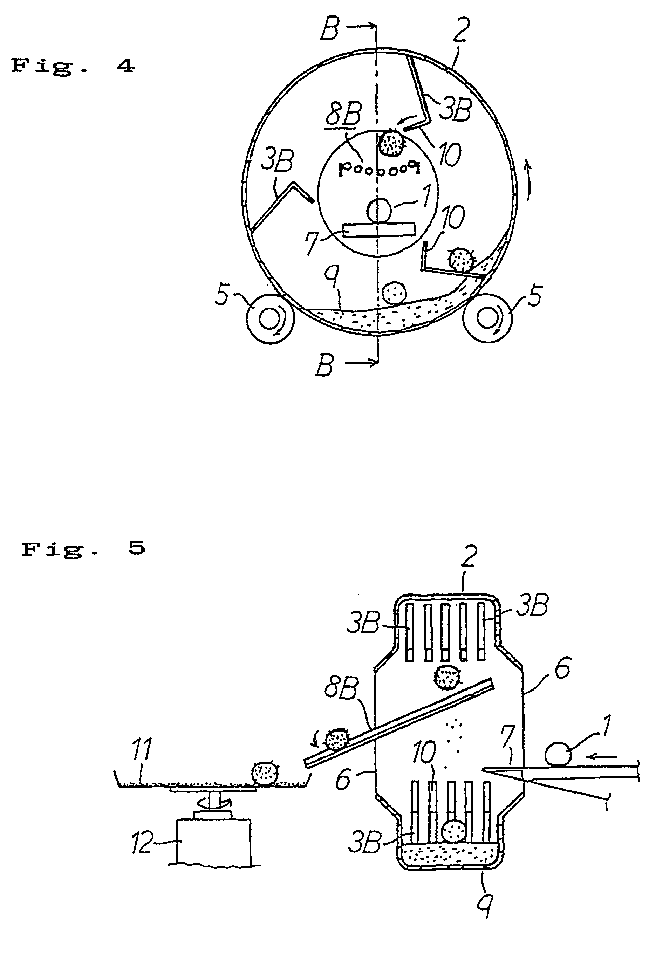

As shown in Fig. 3, comb-shaped engaging members 3 are mounted on the inner surfaces of the rotating drum 2. The comb-shaped engaging members 3 are disposed at points on the inner circumference of the drum that equidistantly divide the circumference and so that the members 3 face the center of the drum.

Two driving rollers 5 are mounted horizontally on the upper part of the driving base 4. Thus, the rotating drum 2 is supported by being set on the driving rollers 5.

A through opening 6 is provided across the rotating drum 2. One end of a feed conveyor 7, which serves as an inlet member for cake products, is disposed close to one side of the opening 6. One end of a discharge conveyor 8, which serves as an outlet member for the covered products, extends from the other side of the opening 6 into the rotatable drum 2. The feed conveyor 7 is disposed at a lower part of the opening 6, while the discharge conveyor 8 is disposed at an upper part of the opening.

Further, the position of the discharge conveyor 8 can be adjusted through lifting means (not shown) so that it can be placed close to the end of the feed conveyor 7.

The operation of the first embodiment will now be described. Powder material 9 is contained in the rotating drum 2. In synchronism with the drum rotation, the powder material repeatedly rises in the direction of the rotation and then falls back. In this state, when a cake product 1 is delivered into the drum 2 by the feed conveyor 7, the product 1 falls into the powder material 9, and rolls along with it as a result of both the rotation of the drum and the flow of the powder material, so that all of the surfaces of the product 1 become covered with the powder material.

As the drum rotates further, the covered product 1 engages an engaging member 3, and is scooped up thereby.

At this time the powder material 9 falls through the spaces between the projections forming the comb, and thus only the product 1 is conveyed by the rotation of the drum 2 to its upper part. As the degree of the slant of the engaging member 3 gradually increases, the conveyed product 1 eventually falls off the engaging member 3 onto the discharge conveyor 8, to be conveyed downstream as a finished covered cake product.

In this embodiment two driving rollers 5 are used to drive the rotating drum 2. However, just one driving roller is sufficient and the other roller may rotate freely. Although the driving rollers both support and drive the drum, separate supporting and driving parts may be provided. Although drive is applied to the periphery of the drum any different part of the drum may be used for this purpose.

Since the angle between the inner surface of the rotating drum and the engaging member controls the timing of the transfer of a product to the discharge conveyor, such angle can be chosen so that the product falls properly into place on the conveyor.

A solid belt may be used for the discharge conveyor. However, since much powder material falls onto the conveyor, the falling powder material can easily be sifted by using a number of string-like round belts.

In this embodiment two openings 6 are provided, one on each side of the rotating drum 2. However, when the space for installing the apparatus is limited or when the apparatus is used solely as a powder material sprinkler i.e. not as a transfer conveyor, the feed and discharge conveyors can be disposed in a single opening, as only one side of the drum 2, while obtaining the same operational effects.

The apparatus of the first embodiment can be effectively operated when powder material 9 with a weak adhesion properties, such as sesame or green laver, is used. However, in some cases where powder material contains moisture or oil, and where it is therefore liable to lump when pressed, the desired effects cannot be obtained. This problem is resolved by the second embodiment of the invention, to be described by reference to Figs. 4 and 5.

In more detail, if the powder material 9 tends to lump, and if the engaging members 3 are mounted perpendicularly to the inner surface of the drum 2, then since the powder material 9 tends to adhere to the engaging members 3, and since the powder material 9 is affected by both the pressing force from the engaging members 3 and its own resistance to flow, the material 9 may be caused to lump and thus be prevented from passing through the spaces of the comb-shaped engaging members. The thus-produced lumps of powder material may then pass over the engaging members and fall back to the bottom of the drum 2 as it rotates. This causes problems in that if insufficient material 9 in powder form is present in the bottom of the drum 2, products 1 fed into the drum may adhere to the inner surface of the drum.

The embodiment of Figs. 4 and 5 mainly differs from the first embodiment in that the engaging members are of a different shape. Thus comb-shaped engaging members 3B are mounted on the inner surface of the drum 2 at positions that equidistantly divide the inner circumference of the drum. Each engaging member is slanted by about 45 degrees from the perpendicularity to the drum circumference, away from the direction of rotation, and has a flange 10 extending at right angles to its free end, towards the direction of rotation.

An outlet member or discharge conveyor 8B is disposed such that its receiving end, inserted through the opening of the rotating drum 2, is located at an upper part of the drum, with its body sloping downwards to the outside of the drum. The outlet member 8B is made up of a plurality of thin shafts to form its conveyor part. The conveyor part is curved along the direction of its width so as to securely hold covered cake products 1. A turntable 11 for holding the covered products is disposed at the end of the outlet member 8B. The turntable 11 is a circular plate with a raised edge, and is driven by a motor 12.

The operation of the second embodiment will now be described. In this embodiment, comb-shaped engaging members 3B are mounted on the inner surface of the drum 2 at positions that equidistantly divide the inner circumference of the drum, with each engaging member slanted by about 45 degrees from perpendicularity to the drum circumference, away from the direction of rotation. As a result, powder material 9 containing the engaging members 3B can easily spread towards the center of the drum 2, so that the so-called bridge phenomenon is avoided and the engaging members are not clogged with powder material.

This arrangement enables the engaging members 3B to have a large total area of space through which the powder material 9 can pass. Thus, regardless of properties of the powder material 9 which may cause it to tend to lump in the drum 2 (such as does soybean powder for example), it can easily pass through the spaces in the engaging members, so that it always stays at the bottom of the drum 2. Therefore, the apparatus can perform continuous sprinkling operations without any products 1 adhering to the inner surface of the drum 2.

Further, since each engaging member 3B has a flange 10 extending in the direction of rotation, products 1 cannot fall prematurely from the engaging members during rotation, so that the products can be reliably transferred onto the discharge conveyor. The preferable angle of inclination of the engaging members 3B can be selected depending on the properties of the powder material 9 and the desired position of the products on the discharge conveyor.

The products 1 released from the engaging members 3B at the upper part of the drum 2 are received on the discharge conveyor 8B. As the discharge conveyor 8B is curved in cross section it holds the products securely, for them to roll onto the turntable 11. Although the engaging members in the first and second embodiments are comb-shaped, they are not limited to that shape. Engaging members of any shape, for example net-shaped or plate-shaped, may be used, so long as they can properly engage the products 1.

It will thus be seen that the present invention, at least in its preferred forms, has the following advantageous features.

Since engaging members for engaging cake products in a rotating drum for holding powder material are mounted on the inner surface of the drum, and since inlet and outlet members for the cake products are disposed in an opening provided at least on one side of the drum and are vertically spaced from one another, use is effectively made of the entire space inside the drum, and the apparatus can thus be made smaller compared with prior art devices.

Since the powder material is circulated in the drum, and since comb-shaped or wire net-shaped engaging members are mounted on the inner surface of the drum at positions that equidistantly divide its inner circumference, so that the powder material is always kept at the bottom of the drum by being sifted through the spaces in the engaging members, cake products in the drum are reliably scooped up, and there is no need to use so much powder material.

Since the outlet member extends through an opening into the drum, and may be a conveyor belt made from a plurality of string-shaped belts wound about rollers, the powder material is circulated without the need for any excess material being discharged.

Since the ends of the inlet and outlet members can be located close together in the same horizontal plane when they are used only for transferring, it is unnecessary to remove the apparatus when no sprinkling operation is needed. This eliminates extra work.

Since cake products can be discharged from the rotating drum by synchronizing the timing of dropping the products into the drum with its rotation, alignment work or packing work in a downstream production process can be easily carried out.

Since the rotating drum can be detachably mounted on a driving base, various kinds of products can be easily produced by merely exchanging one drum for another, if different kinds of powder material are stored in respective drums.

Since the powder material can be circulated within the drum without the need to discharge it outside the drum, neither much extra powder, nor its recovery, are needed. Further, since cleaning work can be automatically carried out, ingress of germs can be prevented.

## Claims

1. Apparatus for sprinkling powder material (9) onto food products (1), comprising:
a drum (2) having an inner surface formed around a central axis, and a plurality of engaging members (3) mounted on the inner surface such that adjacent engaging members are separated by portions of the inner surface and such that the engaging members are fixed relative to one another, the drum also having an opening (6) in at least one side, and
means for rotating the drum around the central axis, wherein the food products are coated with powder material in said drum and the engaging members lift the food products and deposit them onto an outlet member (8);
**characterised in that** the apparatus further comprises:
an inlet member (7) having an end portion extending through at least one said opening for feeding food products between said engaging members, and wherein
said outlet member has an end portion which extends through at least one said opening into the drum.

2. Apparatus as claimed in claim 1, wherein the drum has a through hole extending therethrough to provide a said opening (6) on both sides thereof, the said inlet member (7) being located at one said opening and the said outlet member (8) being located at the other opening.

3. Apparatus as claimed in claim 1 or 2, wherein the said engaging members (3) are equidistantly disposed on the circumference of the drum.

4. Apparatus as claimed in any of claims 1 to 3, wherein the said engaging members (3) are comb-shaped.

5. Apparatus as claimed in any preceding claim, wherein the said engaging members (3B) form an obtuse angle with the inner surface of the drum in the direction of rotation of the drum.

6. Apparatus as claimed in any preceding claim, wherein the said outlet member (8) extends through its said opening (6) into an upper part of the interior of the drum.

7. Apparatus as claimed in any preceding claim, wherein the said outlet member (8) is a conveyor belt comprising a plurality of string-like belts wound around rollers.

8. Apparatus as claimed in any preceding claim, wherein the respective ends of the inlet and outlet members (7,8) are located close to each other.

9. A method of sprinkling food products with powder material in an apparatus as claimed in any of claims 1 to 8, including the step of synchronizing the timing of supply of the food products fed by the inlet member (7) with the rotation of the rotating drum (2).

## Patentansprüche

1. Vorrichtung zum Bestäuben bzw. Bestreuen von Nahrungsmittelprodukten (1) mit einer pulverigen Substanz mit
einer Trommel (2), die eine rund um eine Mittelachse ausgebildete Innenfläche aufweist, sowie eine Mehrzahl von Eingriffselementen (3), die auf der Innenfläche derart angebracht sind, daß einander benachbarte Eingriffselemente durch Bereiche der Innenfläche voneinander getrennt sind, und derart, daß die Eingriffselemente relativ zueinander fixiert sind, wobei die Trommel an zumindest einer Seite eine Öffnung (6) aufweist, und
eine Einrichtung zum Rotieren der Trommel rund um die Mittelachse, wobei die Nahrungsmittelprodukte in der Trommel mit pulveriger Substanz beschichtet werden und die Eingriffselemente die Nahrungsmittelprodukte anheben und auf einem Auslaßelement (8) ablegen,
**dadurch gekennzeichnet, daß** die Vorrichtung ferner aufweist ein Einlaßelement (7) mit einem Endabschnitt, der sich durch die zumindest eine Öffnung hindurch erstreckt, um Nahrungsmittelprodukte zwischen die Eingriffselemente einzuführen, und
das Auslaßelement einen Endabschnitt aufweist, der sich durch zumindest eine Öffnung in die Trommel hinein erstreckt.

2. Vorrichtung nach Anspruch 1, bei welcher die Trommel eine Durchgangsöffnung aufweist, die sich durch sie hindurch erstreckt, um eine Öffnung (6) auf beiden Seiten derselben zu schaffen, wobei das Einlaßelement (7) an einer Öffnung und das Auslaßelement (8) an der anderen Öffnung angeordnet ist.

3. Vorrichtung nach Anspruch 1 oder 2, bei welcher die Eingriffselemente auf dem Umfang der Trommel in gleichem Abstand voneinander angeordnet sind.

4. Vorrichtung nach einem der Ansprüche 1 bis 3, bei welcher die Eingriffselemente (3) kammförmig sind.

5. Vorrichtung nach einem der vorhergehenden Ansprüche, bei welcher die Eingriffselemente (3B) in Drehrichtung der Trommel einen stumpfen Winkel mit der Innenfläche der Trommel bilden.

6. Vorrichtung nach einem der vorhergehenden Ansprüche, bei welcher das Auslaßelement (8) sich durch seine Öffnung (6) in den oberen Teil des Innenraums der Trommel erstreckt.

7. Vorrichtung nach einem der vorhergehenden Ansprüche, bei welcher das Auslaßelement (8) ein Fördergurt ist, der eine Mehrzahl von strangförmigen Gurten aufweist, die um Walzen gewunden sind.

8. Vorrichtung nach einem der vorhergehenden Ansprüche, bei welcher die jeweiligen Enden der Einlaß- und Auslaßelemente (7, 8) nahe aneinander angeordnet sind.

9. Verfahren zum Bestäuben bzw. Bestreuen von Nahrungsmittelprodukten mit einer pulverigen Substanz bei einer Vorrichtung nach einem der Ansprüche 1 bis 8, das einen Schritt der Synchronisierung des Timings der Zufuhr der Nahrungsmittelprodukte, die von dem Einlaßelement (7) zugeführt werden, mit der Rotation der Drehtrommel (2) umfaßt.

## Revendications

1. Dispositif pour saupoudrer de la matière en poudre (9) sur des produits alimentaires (1), comprenant :
un tambour (2) comportant une surface intérieure formée autour d'un axe central, et plusieurs éléments (3) d'engagement montés sur la surface intérieure, de sorte que des éléments d'engagement adjacents sont séparés par des parties de la surface intérieure et que les éléments d'engagement sont fixes les uns par rapport aux autres, le tambour comportant également une ouverture (6) dans au moins un côté, et
un moyen servant à faire tourner le tambour autour de l'axe central, dans lequel les produits alimentaires sont recouverts de matière en poudre dans ledit tambour, et les éléments d'engagement élèvent les produits alimentaires et les déposent sur un élément (8) de sortie ;
**caractérisé en ce que** le dispositif comprend en outre :
un élément (7) d'entrée comportant une partie d'extrémité s'étendant à travers au moins une dite ouverture dans le but d'amener des produits alimentaires entre lesdits éléments d'engagement, et dans lequel
ledit élément de sortie comporte une partie d'extrémité qui s'étend à travers au moins une dite ouverture dans le tambour.

2. Dispositif selon la revendication 1, dans lequel le tambour comporte un trou traversant s'étendant à travers celui-ci pour fournir une dite sortie (6) sur ses deux côtés, ledit élément (7) d'entrée étant situé au niveau d'une dite ouverture et ledit élément (8) de sortie étant situé au niveau de l'autre ouverture.

3. Dispositif selon la revendication 1 ou 2, dans lequel lesdits éléments (3) d'engagement sont disposés de manière équidistante sur la circonférence du tambour.

4. Dispositif selon l'une quelconque des revendications 1 à 3, dans lequel lesdits éléments (3) d'engagement ont une forme de peigne.

5. Dispositif selon l'une quelconque des revendications précédentes, dans lequel lesdits éléments (3B) d'engagement forment un angle obtus avec la surface intérieure du tambour dans le sens de rotation du tambour.

6. Dispositif selon l'une quelconque des revendications précédentes, dans lequel ledit élément (8) de sortie s'étend à travers sa dite ouverture (6) dans une partie supérieure de l'intérieur du tambour.

7. Dispositif selon l'une quelconque des revendications précédentes, dans lequel ledit élément (8) de sortie est une bande de transport comprenant plusieurs courroies de type cordon enroulées autour de rouleaux.

8. Dispositif selon l'une quelconque des revendications précédentes, dans lequel les extrémités respectives des éléments (7, 8) d'entrée et de sortie sont situées proches les unes des autres.

9. Procédé pour saupoudrer des produits alimentaires de matière en poudre dans un dispositif selon l'une quelconque des revendications 1 à 8, incluant l'étape de synchronisation du cadencement d'alimentation des produits alimentaires délivrés par l'élément (7) d'entrée avec la rotation du tambour tournant (2).
